Europäisches Patentamt

European Patent Office

Office européen des brevets

(11) Veröffentlichungsnummer: **0 277 255**
**A1**

## (12) EUROPÄISCHE PATENTANMELDUNG

(21) Anmeldenummer: 87101536.8

(51) Int. Cl.⁴: **E04C 3/18**

(22) Anmeldetag: 05.02.87

(43) Veröffentlichungstag der Anmeldung:
**10.08.88 Patentblatt 88/32**

(84) Benannte Vertragsstaaten:
**AT DE FR GB IT SE**

(71) Anmelder: **Johann Wolf GmbH KG**
**Mühldorf 86**
**A-4644 Scharnstein(AT)**

(72) Erfinder: **Wolf, Johann**
**Mühldorf 86**
**A- 4644 Scharnstein(AT)**

(74) Vertreter: **Seeger, Wolfgang, Dipl.-Phys.**
**SEEGER & SEEGER Patentanwälte &**
**European Patent Attorneys**
**Gottfried-Böhm-Ring 27**
**D-8000 München 70(DE)**

(54) **Verbundträger.**

(57) Verbundträger (3), zumindest teilweise aus besäumten Rundhölzern (1) bestehend, die mittels Nagelplatten (2) verbunden sind, dadurch gekennzeichnet, daß die Rundhölzer entsprechend dem konischen Verlauf von Holzstämmen besäumt und gemäß den statischen Erfordernissen mit gleichgerichteter oder entgegengesetzt gerichteter Konizität mittels Nagelplatten (2) miteinander verbunden sind, die aus zungenförmigen Einstanzungen (12), die parallel zu den Längsrändern der Nagelplatte (10) angeordnet sind, gebildete Nägel aufweist, und deren vorderer Rand (30, 32) und/oder hinterer Rand (30, 32) treppenartig ausgebildet ist.

Fig.3

## Verbundträger

Die Erfindung betrifft Verbundträger, zumindest teilweise aus besäumten Rundhölzern bestehend, die mittels Nagelplatten verbunden sind.

Die bekannten Verbundträger dieser Art setzen sich aus rechteckigen oder quadratischen, allseits beschnittenen prismatischen Balken zusammen. Bei der Herstellung dieser Balken wird vom kleineren Durchmesser am Zopfende eines Holzstammes ausgegangen, wodurch am Fußende, je nach Länge des zu erstellenden Balkens, verhältnismäßig große Abschnitte entstehen, die einen Verlust an tragfähigem Querschnitt ergeben. Der Durchmesser pro Laufmeter nimmt um 1 cm zu bzw ab, so daß ein Baumstamm von beispielsweise 10 m Länge zwischen Fuß-und Zopfende eine Durchmesserunterschied von etwa 10 cm aufweist.

Auch die Verbindung der Balken mit den bekannten Nagelplatten hat sich als verbesserungsfähig erwiesen. Es hat sich nämlich herausgestellt, daß bei schwingenden Lasten und bei Belastungsspitzen die Nägel sich lockern und die Tragfähigkeit des Verbundträgers dadurch vermindert wird.

Aufgabe der vorliegenden Erfindung ist es, Verbundträger zu schaffen, die zumindest teilweise aus Rundhölzern bestehen, die entsprechend dem konischen Verlauf von Holzstämmen gesäumt und gemäß den statischen Erfordernissen mit gleichgerichteter oder entgegensetzt gerichteter Konizität mizeiander verbunden sind und die eine besonders hohe Tragfähigkeit und dauerhafte Haltbarkeit aufweisen.

Diese Aufgabe ist gemäß der Erfindung dadurch gelöst, daß die Rundhölzer entsprechend dem konischen Verlauf von Holzstämmen besäumt und gemäß den statischen Erfordernissen mit gleichgerichteter oder entgegengesetzt gerichteter Konizität mittels Nagelplatten miteinander verbunden sind, die aus zungenförmigen Einstanzungen, die parallel zu den Längsrändern der Nagelplatte angeordnet sind, gebildete Nägel aufweist, und deren vorderer Rand und/oder hinterer Rand treppenartig ausgebildet ist.

Die Erfindung weist den Vorteil auf, daß sie eine besonders kostengünstige Herstellung von besonders tragfähigen Verbundträger ermöglicht.

Dieser Vorteil ist zum einen darauf zurückzuführen, daß die Verwendung von konisch besäumten Balken nur eine minimale Menge an Holzverschnitt verursacht, weil die Balken nach dem natürlichen Verlauf der Baumstämme besäumt sind. Die Balken haben deshalb eine größere tragende Masse als wenn sie zu Balken mit konstantem Querschnitt gesäumt wären.

Ferner wird der Vorteil der besonders hohen und auch besonders dauerhaften Tragfähigkeit durch die Verwendung der besonders gestalteten Nagelplatte erzielt. Die Fußpunktreihen der Nägel verlaufen nicht parallel zu der Faserung der miteinander durch die Nagelplatte zu verbindenden Balken. Wird diese Nagelplatte z. B. mit ihren seitlichen Rändern etwa parallel zu der Stoßfuge zweier miteiander zu verbindender Balken angeordnet, so verlaufen sowohl die Reihen der Nagelfußpunkte, die quer auf der Nagelplatte angeordnet sind, als auch die Reihen von Nagelfußpunkten, die parallel zu den Längsseiten der Nagelplatte angeordnet sind, schräg zu der Stoßfuge der miteinander zu zu verbindenden Balken. Auch die einezelnen flachen Nägel verlaufen mit ihrer breiten Seite schräg zu der Stoßfuge. Dadurch wird die die Haftwirkng der Nagelreihe vergößert und die Gefahr der Lockerung der Verbindung bei schwingenden Lasten und bei Spitzenbelsatungen erheblich verringert.

Hinzu kommt der Vorteil, daß die Haftwirkung der Nagelplatte auch deshalb erheblich größer als bei den bekannten Nagelplatte ist, weil auf der gesamten Fläche der Nagelplatte Nägel gestanzt sind, so daß mehr Nägel zur Erzielung der Haftwirkung vorhanden sind. Schließlich ist auch der Vorteil zu nennen, daß diese Nagelplatte selber besonders kostengünstig herstellbar ist, wodurch die Herstellung des gesamten Verbundträgers weiter erhöht wird.

Nach einer Ausbildungsform der Erfindung besteht der Verbundträger aus Rundhölzern, die an vier Seiten unter Bildung pyramidenstumpfförmiger Rundhölzer mit rechteckigem oder quadratischem Querschnitt besäumt und mit ihren verjüngten Enden, also gleichgerichtet miteinander verbunden sind.

Gemäß einer weiteren Ausführungsform der Erfindung besteht der Verbundträger aus Rundhölzern, die an den als Anlageflächen bestimmten Seiten ensprechend dem konischen Verlauf der Holzstämme besäumt sind, hingegen an den die Nagelplatten aufnehmenden Seiten unter Bildung von zueinander parallelen Flüchen besäumt sind, wobei die Rundhölzer mit entgegengesetzt gerichteter Konizität, also mit dem zopfseitigen Ende auf dem fußseitigen Ende liegend miteinander verbunden sind.

Der Verbundträger kann aus konisch besäumten Rundhölzern bestehen, die mit einem rechteckigen oder quadratischen Querschnitt aufweisenden prismatischen Balken verbunden sind, deren Breite dem Abstand der zueinander parallelen Flächen der Rundhölzer gleich gewählt ist.

Der vordere Rand und der hintere Rand der Nagelplatte können von einem Seitenrand zum anderen Seitenrand hin gleichsinnig ansteigend oder abfallend treppenartig ausgebildet sein. Diese Ausbildungsform bringt den Vorteil mit sich, daß die Nagelplatte in ihrem Außenumfang etwa rhombusförmig ausgebildet ist, wordurch die damit verbundenen Vorteile erzielt werden.

Nach einer anderen Ausbildungsform der Erfindung sind die Stufen des vorderen Randes der Nagelplatte relativ zueiander jeweils in gleichen Abständen wie die Stufen des hinteren Randes relativ zueinander ausgebildet. Diese Ausbildungsform der Erfindung weist zum einen den Vorteil auf, daß die Nagelplatten kostengünstig hergestellt werden können, weil die treppenförmigen Schnitte jeweils mit demsselben Werkzeug druchgeführt werden können. Hinzu kommt der Vorteil, daß diese Nagelplatten, wenn es zweckmäßig oder gar erforderlich ist, jeweils direkt nebeneinander, ohne Abstand zwischeneinander, angeordnet werden können.

Nach einer weiteren Weiterbildung der Erfindung sind seitlich benachbarte Einstanzungen jeweils gegensinnig ausgerichtet. Diese Weiterbildung bringt den Vorteil mit sich, daß die Nagelplatte selber ein Höchstmaß an Stabilität beibehält.

Zweckmäßigerweise sind die Fußpunkte von den Einstanzungen der Nägel einer sich quer von einem Seitenrand zum anderen erstreckenden Nagelreihe von den Fußpunkten der zwischen Ihnen angeordneten, gegensinnig ausgebildeten Einstanzungen um einen Abstand entfernt, der größer als die Länge der Einstanzungen ist. Auch diese Asubildungsform der Erfindung trägt dazu bei daß ein Höchstmaß and Stabilität der Nagelplatte beibehalten wird. Dadurch wird der weitere Vorteil erzielt, daß die Nagelplatte aus relativ dünnem Blech bestehen kann, wodurch wiederum die Kosten der Nagelplatte niedrig gehalten werden.

Die Abstände der Reihen von gleichsinning ausgerichteten Einstanzungen können jeweils gleich groß sein.

Die Fußpunkte einer Reihe von Einstanzungen jeweils zwischen zwei Reihen von Fußpunkten von gegensinnig ausgerichteten Eintanzungen liegen. Dadurch wird die Ausbildung einer maximalen Anzahl von Nägeln pro Nagelplattenfläche bei gleichzeitiger Beibehaltung eines Höchstmaßes and Stabilität erzielt.

Die Erfindung ist im folgenden anhand einiger Ausführungsbeispiele und in Verbindung mit der Zeichnung näher beschrieben. Im einzelnen zeigen:

Fig. 1 in Stirnansicht die Bildung eines besäumten Rundholzes,

Fig. 2 in Seitenansicht die Bildung von Dackträgern aus konisch besäumten Rundhölzern,

Fig. 3 die Bildung eines Verbundträgers mit rechteckigem Querschnittsverlauf,

Fig. 4 eine weitere Ausführungsform eines Verbundträgers mit rechteckigem Querschnittsverlauf, in vereinfachter Darstellung,

Fig. 5 eine Draufsicht auf die Figuren 3 und 4 in vereinfachter Darstellung, und

Fig. 6 eine erfindungsgemäße Nagelplatte in Draufsicht, mit gestanzten, aber in der Mehrzahl noch nicht umgebogenen zungenförmigen Nägeln,

Fig. 7 einen aus zwei Balken, mittels der erfindungsgemäßen Nagelplatte hergestellten Verbundträger, und

Fig. 8 eine Dachbalkenkonstruktion unter Verwendung erfindungsgemäßer Nagelplatten.

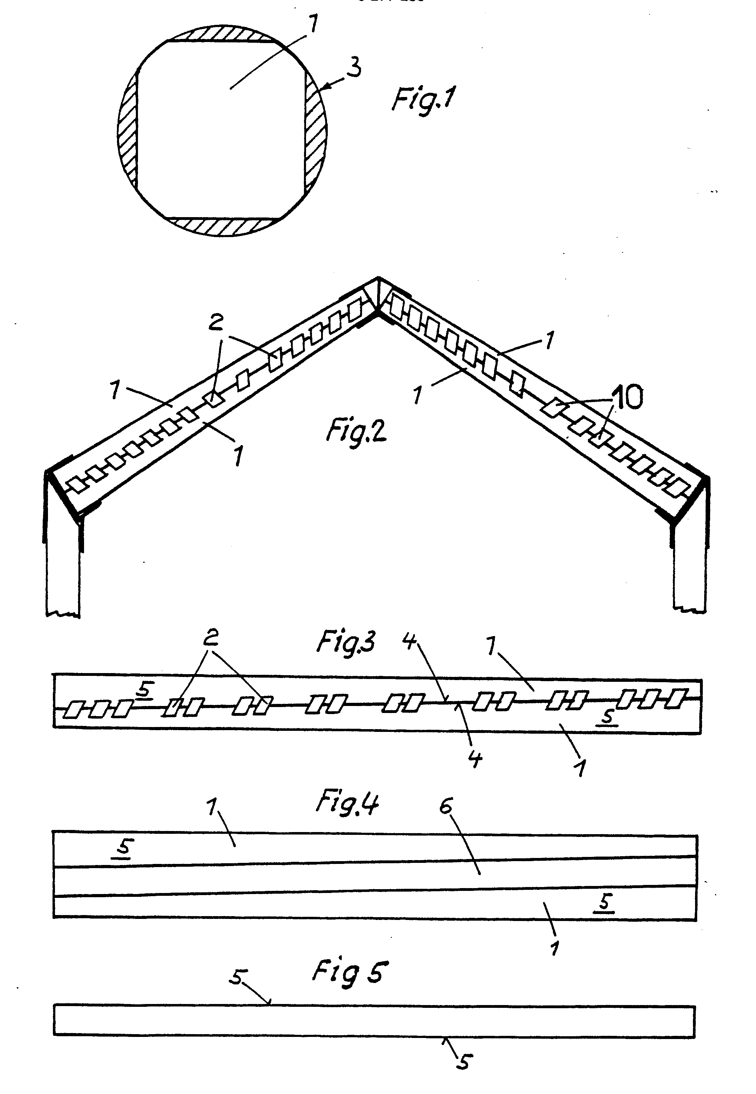

In Figur 1 ist ein Holzstamm (3) veranschaulicht, aus dem durch Besäumen an vier Seiten entsprechend seinem konischen Verlauf Rundhölzer (1) gebildet werden. Solche Rundhölzer, die also eine pyramidenstumpfförmige Gestalt aufweisen, können nach Figur 2 zu einer Trägereinheit mittels Nagelplatten (2) verbunden werden, wobei die verjüngten, also zopfseitigen Enden, gleichgerichtet sind, womit den statischen Bedingungen einer Dachkonstruktion Rechnung getragen ist.

Bei der Ausführungsform gemäß Figur 3 weist der Verbundträger einen gleichen Querschnittsverlauf auf, dabei sind die Rundhölzer (1) mit entgegengesetzt gerichteter Konizität mit dem zopfseitigen, verjüngten Ende auf fußseitigen Ende liegend, auf den konischen Auflageflächen (4), durch die Nagelplatten (10) miteinander verbunden. Jene Flächen (5), welche die Nagelplatten (10) aufnehmen, sind parallel zueinander besäumt, womit sich der rechteckige Querschnitt ergibt.

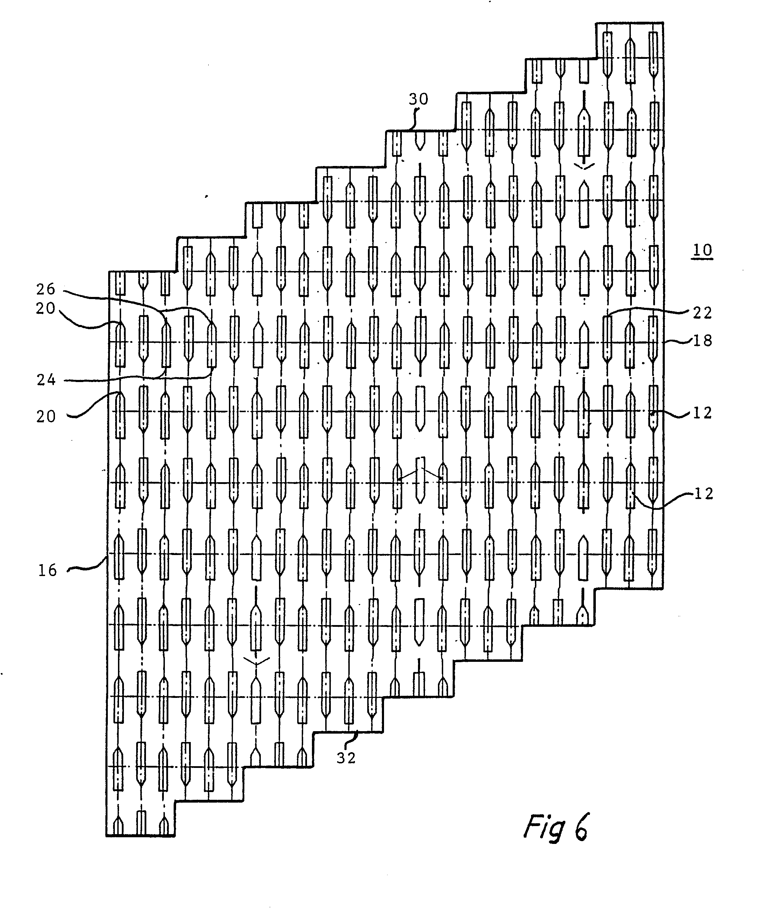

Die Figur 4 stellt einen Verbundträger unter Weglassung der Nagelplatten (10) dar, der aus Rundhölzern (1) gebildet ist, die, wie in Figur 3 dargestellt, mit den verjüngten, zopfseitigen Enden entgegegesetzt gerichtet angeordnet sind. Zwischen diesen Rundhölzern (1) ist ein im Querschnitt rechteckiger oder quadratischer Balken (6) angeordnet. Die Breite dieses Balkens (6) entspricht dem Abstand der parallel zueinander liegenden Flächen der Rundhölzer (1). Figur 5 stellt, wieder unter Weglassung der Nagelplatten (10), eine Draufsicht auf einen Verbundträger gemäß den Figuren 3 und 4 dar.

Die Figur 6 zeigt eine Draufsicht auf eine erfindungsgemäße Nagelplatte 10. Die Stanzungen 12 sind parallel zu den Längsrändern 16 bzw. 18 der Platte 10 ausgerichtet und umgebogen, so daß sie Nägel bilden. Abwechseind ist immer eine Stanzungsreihe in einem Sinne, parallel zu den Seitenrändern 16 und 18 ausgerichtet, und die in Richtung der Seitenränder nächst folgende Reihe von Stanzungen ist gegensinnig ausgerichtet. Diese Stanzungen sind so angeordnet, daß die Spitzen 20 von einer Reihe von Stanzungen sich zwischen zwei gegensinnig ausgebildete Stanzungen erstrecken. Der Abstand der Fußpunkte 24 der einen Reihe von Stanzungen ist jedoch von den Fußpunkten 26 der mit ihr verschachtelten Stanzungen so weit entfernt, daß die Spitzen 20 jeweils auf einer Querreihe angeordnet sind, die sich zwischen den Fußpunktreihen zweier ineinander verschachtelten Reihen erstrecken. Auf diese Weise ist der Bereich zwischen zwei Fußpunkten 24,24 und 26,26 durch keine Stanzung unterbrochen. Dadurch wird eine besonders hohe Stabilität der Nagelplatte erzielt.

Der vordere Rand 30 und der hintere Rand 32 der Nagelplatte sind treppenförmig, von links unten nach rechts oben ansteigend, ausgebildet. Dieser Ausführungsform der Erfindung bringt den erwünschten Effekt, daß die Nagelplatte 10 selber in ihrem Außenumfang angenähert rhombusförmig ausgebildet ist.

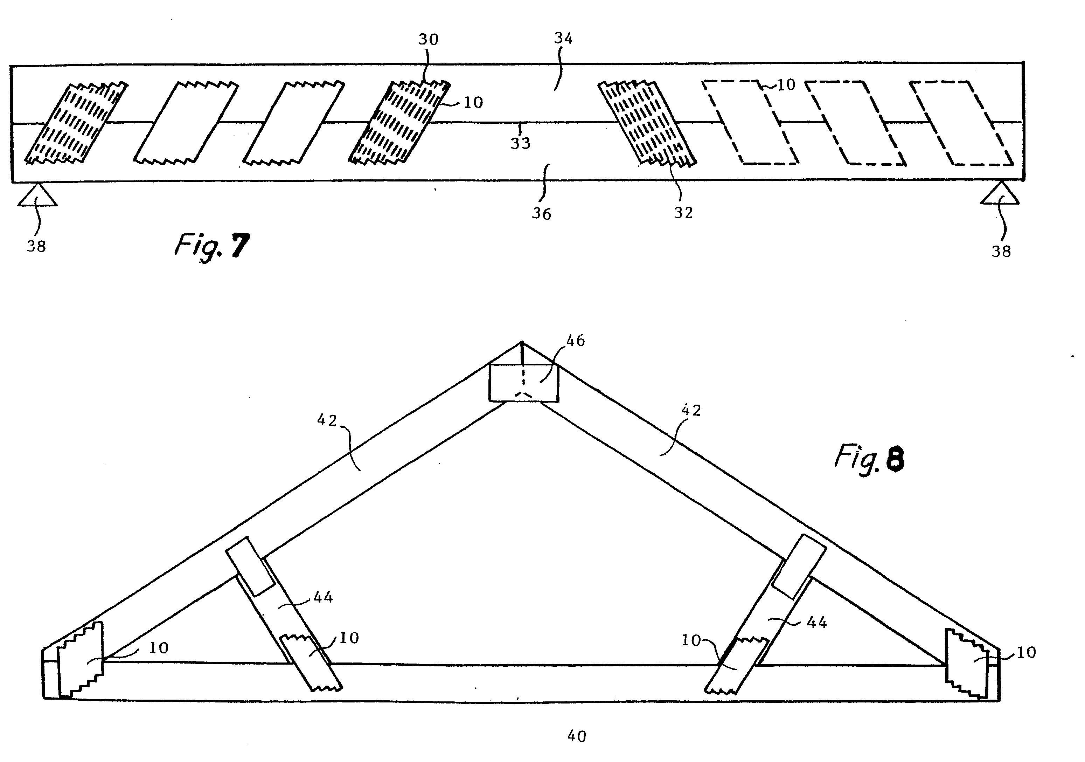

In der Fig. 7 sieht man einen Verbundträger, der aus zwei Balken 34 und 36 besteht, die durch die erfindungsgemäße Nagelplatten 10 miteinander verbunden sind. Die Tragkeile 38 zeigen zwei Auflager, auf welchen der Verbundträger mit seinen beiden Enden aufliegt.

Wie man in dieser Figur 7 sieht, sind die erfindungsgemäßen Nagelplatten 10 so an die beiden Balken angenagelt, daß die treppenförmigen vorderen und hinteren Ränder 30 bzw. 32 der Nagelplatte etwa parallel zu der Stoßfuge 33 zwischen den beiden miteinander verbundenen Balken 34 und 36 angeordnet sind. Bei dieser Anordnung verlaufen sowohl die Nagelreihen, die sich parallel zu der Längsseite 16 bzw. 18 der Nagelplatte 10 erstrecken, als auch die quer zur Nagelplatte verlaufenden Reihen von Nägeln schräg zu der Stoßfuge 33. Dadurch wird eine besonders große Haftwirkung erzielt.

Wie man außerdem sowohl durch einen Blick auf die Fig. 6 als auch auf die Fig. 7 sieht, steht der gesamte Flächenbereich der Nagelplatte 10 zur Anbringung von Nägeln zur Verfügung. Dadurch wird die Haftwirkung von des Verbundträgers besonders groß.

Die Fig. 8 zeigt eine Dachbalkenkonstruktion aus einem Träger 40 und zwei Giebelbalken 42 und zwei weiteren Schrägstützen 44. Der Trägen 40 und die Giebelblaken 42 sind jeweils durch Nagelplatten 10 gemäß der vorliegenden Erfindung miteinander verbunden. Auch der Querträger 40 und die Schrägstützen 44 sind jeweils durch erfindungsgemäße Nagelplatten 10 eng miteinander verbunden. Wie man in dieser Figur sieht, können die erfindungsgemäßen Nagelplatten 10 auch zusammen mit anderen Nagelplatten 46 zur Herstellung von Verbundkonstruktionen verwendet werden.

Die vorliegende Erfindung erlaubt eine Vielzahl von ähnlichen Ausführungsformen der Nagelplatte und eine Vielzahl von vorteilhaften Anwendungen, die sich für den Durchschnitsfachmann aus der obigen Beschreibung ergeben. Solche Ausführungsformen fallen in den Schutzumfang der vorliegenden Erfindung.

## Ansprüche

1. Verbundträger, zumindest teilweise aus besäumten Rundhölzern bestehend, die mittels Nagelplatten verbunden sind, dadurch gekennzeichnet, daß die Rundhölzer (1) entsprechend dem konischen Verlauf von Holzstämmen (3) besäumt und gemäß den statischen Erfordernissen mit gleichgerichteter oder entgegengesetzt gerichteter Konizität mittels Nagelplatten miteinander verbunden sind, die aus zungenförmigen Einstanzungen, die parallel zu den Längsrändern der Nagelplatte (10) angeordnet sind, gebildete Nägel aufweist, und deren vorderer Rand (30) und/oder hinterer Rand (32) im wesentlichen schräg zu den Längsrändern der Nagelplatte ausgebildet sind.

2. Verbundträger nach Anspruch 1, dadurch gekennzeichnet, daß deren vorderer Rand (30) und/oder hinterer Rand (32) im wesentlichen treppenförmig ausgebildet sind.

3. Verbundträger nach einem der vorhergehenden Ansprüche, dadurch gekennzeichnet, daß er aus Rundhölzern (1) besteht, die an vier Seiten unter Bildung pyramidenstumpfförmiger Rundhölzer (1) mit rechteckigem oder quadratischem Querschnitt besäumt und mit ihren verjüngten Enden, also gleichgerichtet miteinander verbunden sind.

4. Verbundträger nach einem der vorhergehenden Ansprüche, dadurch gekennzeichnet, daß die an den als Anlageflächen (4) bestimmten Seiten ensprechend dem konischen Verlauf der Holzstämme (3) besäumt sind, hingegen an den die Nagelplatten (2) aufnehmenden Seiten unter Bildung von zueinander parallelen Flächen (5) besäumt sind, wobei die Rundhölzer (1) mit entgegengesetzt gerichteter Konizität, also mit dem zopfseitigen Ende auf dem fußseitigen Ende liegend miteinander verbunden sind.

5. Verbundträger nach einem der vorhergehenden Ansprüche, dadurch gekennzeichnet, daß die Trägereinheit aus konisch besäumten Rundhölzern (1) besteht, die mit einem rechteckigen oder quadratischen Querschnitt aufweisenden prismatischen Balken (6) verbunden sind, deren Breite dem Abstand der zueinander parallelen Flächen der Rundhölzer gleich gewellt ist.

6. Verbundträger nach einem der vorhergehenden Ansprüche, dadurch gekennzeichnet, daß der vordere Rand (30) und der hintere Rand (32) der Nagelplatte (10) von einem Seitenrand (16) zum anderen Seitenrand (18) gleichsinnig ansteigend oder abfallend treppenartig ausgebildet ist.

7. Verbundträger nach einem der vorhergehenden Ansprüche, dadurch gekennzeichnet, daß die Stufen des vorderen Rands (30) der Nagelplatte (10) relativ zueinander jeweils die gleichen Abstände wie die Stufen des hinteren Randes (32) relativ zueinander aufweisen.

8. Verbundträger nach einem der vorhergehenden Ansprüche, dadurch gekennzeichnet, daß die seitlich benachbarten Einstanzungen (12) jeweils gegensinnig ausgerichtet sind.

9. Verbundträger nach einem der vorhergehenden Ansprüche, dadurch gekennzeichnet, daß die Fußpunkte von den Einstanzungen (12) der Nägel einer sich quer von einem Seitenrand (16) zum anderen Seitenrand (18) erstreckenden Nagelreihe von den Fußpunkten der zwischen ihnen angeordneten gegensinnig ausgebildeten Einstanzungen (12) um einen Abstand entfernt sind, der größer als die Länge der Einstanzungen (12) ist.

10. Verbundträger nach einem der vorhergehenden Ansprüche, dadurch gekennzeichnet, daß die Abstände zwischen den Reihen von gegensinnig ausgerichteten Einstanzungen (12) jeweils gleich groß sind.

11. Verbundträger nach einem der vorhergehenden Ansprüche, dadurch gekennzeichnet, daß die Fußpunkte einer Reihe von Einstanzungen (12) jeweils zwischen zwei Reihen von Fußpunkten von gegensinnig ausgerichteten Einstanzungen (12) liegen.

Fig.1

Fig.2

Fig.3

Fig.4

Fig 5

Fig 6

Fig. 7

Fig. 8

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| Y | EP-A-0 181 854 (J. WOLF GMBH KG) <br> * Figuren 1-3; Zusammenfassung; Ansprüche 1, 4 * <br> --- | 1,4,6, 8-11 | E 04 C 3/18 |
| Y | US-A-4 510 724 (K. MAGNUSON) <br><br> * Figuren 1-3; Spalte 3, Zeilen 16-34; Spalte 5, Zeilen 1-7 * <br> --- | 1,4,6, 8-11 | |
| A | FR-A- 962 589 (L. V. ITZ-MILDENSTEIN) <br> * Figuren 1-6; Seite 1, Zeilen 18-43; Zusammenfassungen a, g * <br> --- | 1 | |
| A | FRICK/KNÖLL/NEUMANN "Baukonstruktionslehre Teil 1", 27. Auflage, 1983, Seite 79, B.G. Teubner, Stuttgart; * Figur 1.96a) * <br><br> ----- | 1 | |

| RECHERCHIERTE SACHGEBIETE (Int. Cl.4) |
|---|
| E 04 C 3/00 <br> E 04 B 1/00 <br> E 04 B 2/00 |

Der vorliegende Recherchenbericht wurde für alle Patentansprüche erstellt.

| Recherchenort | Abschlußdatum der Recherche | Prüfer |
|---|---|---|
| BERLIN | 14-08-1987 | BOUSQUET K.C.E. |